# EUROPÄISCHE PATENTSCHRIFT

(11) **EP 3 581 869 B1**
(45) Veröffentlichungstag und Bekanntmachung des Hinweises auf die Patenterteilung: **23.03.2022**
(21) Anmeldenummer: 19178806.6
(22) Anmeldetag: 06.06.2019
(51) Int. Cl.: F28D 7/10, F28D 7/00, F28F 17/00, B01D 53/26, E03B 3/28, F02B 29/04, F02M 26/35, F24F 13/22, F28D 21/00

(54) **GASENTFEUCHTUNGSVORRICHTUNG UND TRANSPORTMITTEL MIT EINER GASENTFEUCHTUNGSVORRICHTUNG**
GAS HUMIDIFICATION DEVICE AND TRANSPORTATION MEANS WITH A GAS HUMIDIFICATION DEVICE
DISPOSITIF DE DÉSHUMIDIFICATION DE GAZ ET MOYEN DE TRANSPORT DOTÉ D'UN DISPOSITIF DE DÉSHUMIDIFICATION DE GAZ

(30) Priorität: 15.06.2018 DE 102018114352
(43) Veröffentlichungstag der Anmeldung: 18.12.2019
(73) Patentinhaber: Airbus Operations GmbH, 21129 Hamburg (DE)
(72) Erfinder: Piesker, Markus, 21129 Hamburg (DE)
(74) Vertreter: Schornack, Oliver

(56) Entgegenhaltungen:
- DE-A1- 1 960 953
- DE-A1-102016 100 192
- US-A1- 2015 007 594

## Beschreibung

Die Erfindung betrifft eine Gasentfeuchtungsvorrichtung mit wahlweiser Zuführung eines warmen Fluids in einen ersten oder zweiten Wärmeübertrager und betrifft ferner ein Transportmittel mit einer derartigen Gasentfeuchtungsvorrichtung. Insbesondere betrifft die Erfindung eine Gasentfeuchtungsvorrichtung, bei der das warme Fluid in den ersten oder zweiten Wärmeübertrager geleitet wird, um einen Bereich des Wärmeübertragers zu enteisen, während der andere des ersten oder zweiten Wärmeübertragers zur Gasentfeuchtung verwendet wird, sowie ein entsprechend ausgerüstetes Transportmittel.

In vielen Anwendungen werden Gase verwendet, die einen besonders hohen Trocknungsgrad aufweisen müssen, d.h. in denen die Gase einen sehr geringen Wassergehalt (idealerweise einen Wassergehalt gleich Null) aufweisen. Beispielsweise muss das einer Brennstoffzelle zugeführte Gas (H₂ und O₂) entfeuchtet werden, um einen hohen Wirkungsgrad der Brennstoffzelle zu erzielen.

Bei der Trocknung oder Entfeuchtung von Gasen wird die Temperatur des Gases abgesenkt, sodass diese unter den Taupunkt von Wasser fällt. Dabei kann das in dem Gas enthaltene Wasser als Tauwasser ausgeschieden werden. Je tiefer die Temperatur abgesenkt wird, desto trockener wird das Gas. Das Kühlen des Gases erfolgt mittels eines entsprechenden Wärmeübertragers, der dem Gas Wärmeenergie entzieht.

Um eine hohe Trocknungsqualität von Gasen zu erreichen, muss das entsprechende Gas unter den Gefrierpunkt von Wasser abgekühlt werden. Dies hat jedoch zur Folge, dass in dem Wärmeübertrager das auskondensierte Wasser gefriert, beispielsweise an einer kalten Wandung des Wärmeübertragers oder in Form von Eiskristallen, die aus dem Gas ausgeschieden werden. Diese Eisbildung lässt sich nicht verhindern, solange eine hohe Trocknungsqualität erreicht werden muss, bewirkt aber eine zunehmende Verengung des Strömungsquerschnitts des Wärmeübertragers (durch Ablagerung von Eiskristallen) und/oder reduziert die Leistung des Wärmeübertragers aufgrund der wachsenden Eisschicht an den Wänden des Wärmeübertragers.

Die Entfernung des Eises aus dem Wärmeübertrager erfolgt meist durch Heizen des Wärmeübertragers. So kann beispielsweise ein Kühlluftstrom durch einen Heizluftstrom ersetzt werden, der die Wandung des Wärmeübertragers, an der sich eine Eisschicht gebildet hat, erwärmt, sodass das Eis geschmolzen wird. In dieser Phase kann der Wärmeübertrager jedoch nicht zum Entfeuchten des Gases verwendet werden. Eine Gasentfeuchtungsvorrichtung gemäß dem Oberbegriff von Anspruch 1 ist bekannt aus dem Dokument DE 19 60 953 A1.

Der Erfindung liegt daher die Aufgabe zugrunde, eine Gasentfeuchtungsvorrichtung, die eine kontinuierliche Trocknung eines Gasstromes effizient und kostengünstig ermöglicht, und ein Transportmittel mit solch einer Gasentfeuchtungsvorrichtung bereitzustellen.

Diese Aufgabe wird durch eine Gasentfeuchtungsvorrichtung mit den Merkmalen des Anspruchs 1, und durch ein Transportmittel mit den Merkmalen des Anspruchs 15 gelöst.

Gemäß einem ersten Aspekt umfasst eine Gasentfeuchtungsvorrichtung einen ersten Wärmeübertrager, der eine erste Fluidleitung und eine zweite Fluidleitung umfasst, wobei die zweite Fluidleitung die erste Fluidleitung zumindest abschnittsweise umgibt, und einen zweiten Wärmeübertrager, der eine erste Fluidleitung und eine zweite Fluidleitung umfasst, wobei die zweite Fluidleitung die erste Fluidleitung zumindest abschnittsweise umgibt. Mit anderen Worten ist zumindest ein Abschnitt der ersten Fluidleitung innerhalb der zweiten Fluidleitung angeordnet und ein Teil der zweiten Fluidleitung ummantelt den zumindest einen Abschnitt der ersten Fluidleitung.

Das in der ersten Fluidleitung strömende Fluid kann jede beliebige Flüssigkeit oder jedes beliebige Gas sein. Das Fluid ist in der Lage, Wärmeenergie zu transportieren und über das Material der ersten Fluidleitung an das Fluid in der zweiten Fluidleitung abzugeben.

Ferner kann der erste Wärmeübertrager dazu eingerichtet sein, ein in der zweiten Fluidleitung des ersten Wärmeübertragers befindliches, zu entfeuchtendes Fluid mit einem ersten Kühlmedium auf einer Außenseite der zweiten Fluidleitung des ersten Wärmeübertragers thermisch zu koppeln, wobei der erste Wärmeübertrager mit Kühlrippen, die eine Oberfläche der Außenseite der zweiten Fluidleitung vergrößern, ausgestattet ist. Die thermische Kopplung kann in einer einfachen Weise darin bestehen, dass das erste Kühlmedium die Außenseite der zweiten Fluidleitung berührt und/oder darüber strömt, sodass das Kühlmedium Wärmeenergie von dem Material der zweiten Fluidleitung aufnehmen kann und dabei die zweite Fluidleitung kühlt. Entsprechend nimmt die zweite Fluidleitung Wärmeenergie aus dem in der zweiten Fluidleitung des ersten Wärmeübertragers befindlichen Fluids auf, sodass eine thermische Kopplung zwischen Fluid und Kühlmedium hergestellt ist.

Das in der zweiten Fluidleitung strömende Fluid kann jedes beliebige Gas sein, das entfeuchtet werden muss. Selbstverständlich kann das Fluid auch eine Flüssigkeit sein, die Wasser enthält, das durch Abkühlen des Fluids kristallisiert (Eisbildung) und dadurch aus dem in der zweiten Fluidleitung strömenden Fluid entfernt werden kann. Hierfür können Filter vorgesehen sein, die die Eiskristalle herausfiltern, und/oder Wasserabscheider, um Kondenswasser oder Schmelzwasser abzusondern.

Auch der zweite Wärmeübertrager kann dazu eingerichtet sein, ein in der zweiten Fluidleitung des zweiten Wärmeübertragers befindliches, zu entfeuchtendes Fluid mit einem zweiten Kühlmedium auf einer Außenseite der zweiten Fluidleitung des zweiten Wärmeübertragers thermisch zu koppeln, wobei der zweite Wärmeübertrager mit Kühlrippen, die eine Oberfläche der Außenseite der zweiten Fluidleitung vergrößern, ausgestattet ist. Die thermische Kopplung erfolgt hier in gleicher Weise wie bei dem ersten Wärmeübertrager.

In einer Ausgestaltungsvariante weist der erste Wärmeübertrager und/oder der zweite Wärmeübertrager an der Außenseite der jeweiligen zweiten Fluidleitung Kühlrippen oder andere Vorsprünge auf, um die Oberfläche der Außenseite der jeweiligen zweiten Fluidleitung und damit die Kontaktfläche mit dem jeweiligen Kühlmedium zu vergrößern.

In einer weiteren Ausgestaltungsvariante weist der erste Wärmeübertrager und/oder der zweite Wärmeübertrager an der Außenseite der jeweiligen ersten Fluidleitung und/oder an der Innenseite der jeweiligen zweiten Fluidleitung Kühlrippen oder andere Vorsprünge auf. Beispielsweise können auch Distanzbleche oder Distanzkörper in dem Bereich zwischen der Außenseite der jeweiligen ersten Fluidleitung und der Innenseite der jeweiligen zweiten Fluidleitung angeordnet sein. Diese Distanzbleche oder Distanzkörper erhöhen die Stabilität des jeweiligen Wärmeübertragers, insbesondere bei langen Fluidleitungen, und können auch als Montagehilfe benutzt werden. Die Kühlrippen, Vorsprünge, Distanzbleche und/oder Distanzkörper erzeugen Wirbel und/oder Turbulenzen in dem durch die jeweilige zweite Fluidleitung strömenden Fluid, wodurch der Wärmeübergang zwischen jeweiliger erster Fluidleitung und durch die jeweilige zweite Fluidleitung strömendes Fluid bzw. zwischen jeweiliger zweiter Fluidleitung und durch die jeweilige zweite Fluidleitung strömendes Fluid erhöht wird. Optional können die Kühlrippen und/oder anderen Vorsprünge sowohl an der jeweiligen ersten Fluidleitung und an der jeweiligen zweiten Fluidleitung, aber jeweils nur an einer der beiden Fluidleitungen, angeordnet sein. Mit anderen Worten sind die Kühlrippen und/oder anderen Vorsprünge der ersten Fluidleitung nicht mit denen der zweiten Fluidleitung verbunden. Solch ein Wärmeübertrager, unabhängig davon, ob er an der ersten Fluidleitung oder der zweiten Fluidleitung oder an beiden Fluidleitungen angeordnete Kühlrippen, Vorsprünge, Distanzbleche und/oder Distanzkörper aufweist, kann durch ein 3D-Druckverfahren, beispielsweise mittels ALM-Verfahren (Additive Layer Manufacturing), einfach und kostengünstig hergestellt werden. Zudem lassen sich mit einem ALM-Verfahren beliebige Konturen der Fluidleitungen und/oder der Kühlrippen, Vorsprünge, Distanzbleche und/oder Distanzkörper herstellen.

Ferner kann die Gasentfeuchtungsvorrichtung ein Ventil umfassen, das zwei Positionen einnehmen kann. Dabei kann in einer ersten der zwei Positionen ein Fluid, das eine höhere Temperatur als das erste und/oder zweite Kühlmedium aufweist, in die erste Fluidleitung des ersten Wärmeübertragers geleitet werden und in einer zweiten der zwei Positionen des Ventils kann das Fluid in die erste Fluidleitung des zweiten Wärmeübertragers geleitet werden. Beispielsweise kann das Ventil in einer allgemeinen Fluidleitung angeordnet sein und ein in der allgemeinen Fluidleitung strömendes Fluid entweder zu dem ersten Wärmeübertrager oder dem zweiten Wärmeübertrager, und insbesondere zu der jeweiligen ersten Fluidleitung des ersten oder zweiten Wärmeübertragers, leiten.

Schließlich kann die Gasentfeuchtungsvorrichtung eine Steuerung umfassen, die dazu eingerichtet ist, das Ventil wahlweise in die erste oder zweite Position zu stellen. Durch die Steuerung und das Ventil lässt sich wahlweise ein Fluid in den ersten Wärmeübertrager oder den zweiten Wärmeübertrager leiten, das eine höhere Temperatur als das erste und/oder zweite Kühlmedium aufweist. Dies ermöglicht ein Erwärmen (Heizen) des entsprechenden Wärmeübertragers von innen heraus. Durch Einleiten des wärmeren Fluids in die jeweilige erste Fluidleitung des ersten oder zweiten Wärmeübertragers gibt die erste Fluidleitung Wärmeenergie an das in der zweiten Fluidleitung enthaltene Fluid ab. Eventuell in der zweiten Fluidleitung enthaltenes Eis (auskristallisiertes Fluid) wird dadurch geschmolzen und der jeweilige Wärmeübertrager kann enteist werden. Die Temperatur des mithilfe des Ventils in die erste Fluidleitung geleiteten Fluids kann eine Temperatur aufweisen, die oberhalb des Gefrierpunkt des in der zweiten Fluidleitung befindlichen Fluids liegt. Dadurch lässt sich ein schnelles Enteisen des entsprechenden Wärmeübertragers ermöglichen.

Zwischen dem Ventil und dem ersten und zweiten Wärmeübertrager sind jeweilige Fluidleitungen vorgesehen. Alternativ sind der erste und zweite Wärmeübertrager derart angeordnet, dass das Ventil direkt an der jeweiligen ersten Fluidleitung des ersten und zweiten Wärmeübertragers angeschlossen werden kann. Dadurch lässt sich ein Wärmeenergieverlust des in die jeweilige erste Fluidleitung eingeleiteten Fluids verringern und das Enteisen des jeweiligen Wärmeübertragers beschleunigen.

Die erste und zweite Fluidleitung jedes des ersten und zweiten Wärmeübertragers kann eine beliebige Querschnittsform aufweisen. So können die erste und zweite Fluidleitung jeweils einen kreisförmigen Querschnitt haben, wobei die zweite Fluidleitung einen größeren Durchmesser aufweist als die erste Fluidleitung. Ein kreisförmiger Querschnitt bietet die größte Stabilität in Bezug auf einen auf die erste und zweite Fluidleitung wirkenden Druck. Zusätzlich oder alternativ kann mindestens eine der ersten und zweiten Fluidleitung mindestens eines des ersten und zweiten Wärmeübertragers eine andere Querschnittsform aufweisen, beispielsweise eine elliptische Form, eine rechteckige Form, eine quadratische Form oder eine polygonale Form. Die jeweilige Querschnittsform kann symmetrisch sein oder eine beliebige asymmetrische Form aufweisen. Durch entsprechende Auswahl der Querschnittsform kann eine Oberfläche der jeweiligen Fluidleitung bestimmt werden, die ein Enteisen des jeweiligen Wärmeübertragers begünstigt. Beispielsweise verhindert eine Querschnittsform einer der zweiten Fluidleitungen mit möglichst wenigen Ecken (optimal elliptisch oder kreisförmig) oder möglichst wenig Krümmungswechseln die Bildung von Nischen, die nach einem Vereisen von der Wärmeenergie des in die erste Fluidleitung geleiteten Fluids schlecht erreicht werden und somit schlechter enteist werden können. Auf der anderen Seite erhöht eine Querschnittsform der zweiten Fluidleitung mit Ecken und/oder Krümmungswechseln die für die thermische Kopplung mit dem jeweiligen Kühlmedium zur Verfügung stehende Fläche, wodurch das zu entfeuchtende Fluid besser gekühlt und somit besser entfeuchtet werden kann. Auch für die erste Fluidleitung eignet sich eine Querschnittsform mit Ecken und/oder Krümmungswechseln, um die thermische Kopplung zwischen dem Fluid in der ersten Fluidleitung mit dem Fluid (Eis) in der zweiten Fluidleitung zu verbessern.

Dadurch dass die zweite Fluidleitung des ersten und zweiten Wärmeübertragers die erste Fluidleitung umgibt, weist die zweite Fluidleitung eine größere Oberfläche auf als die erste Fluidleitung (zumindest in dem Bereich, in dem die zweite Fluidleitung die erste Fluidleitung umgibt). Dies stellt sicher, dass ein Wärmestrom zwischen der zweiten Fluidleitung und dem Kühlmedium größer ist als ein Wärmestrom zwischen der ersten Fluidleitung und dem in der zweiten Fluidleitung strömenden Fluid.

In einer Ausgestaltungsvariante kann die Gasentfeuchtungsvorrichtung ferner mindestens eine Fördereinrichtung für das erste und/oder zweite Kühlmedium umfassen. Die Fördereinrichtung kann beispielsweise in Form einer Pumpe, eines Kompressors oder eines Gebläses implementiert sein. Die Steuerung ist ferner dazu eingerichtet, das erste Kühlmedium über die Außenseite der zweiten Fluidleitung des ersten Wärmeübertragers zu fördern, wenn das Ventil in die zweiten Position gestellt ist, und das zweite Kühlmedium über die Außenseite der zweiten Fluidleitung des zweiten Wärmeübertragers zu fördern, wenn das Ventil in die erste Position gestellt ist. Mit anderen Worten kann die Steuerung die mindestens eine Fördereinrichtung derart steuern, dass der Wärmeübertrager, der enteist werden muss, nicht von dem Kühlmedium überströmt wird. Dadurch wird die Kühlung des Fluids in der zweiten Fluidleitung und somit ein Fortschreiten der Vereisung unterbrochen.

Ferner kann die Steuerung dazu eingerichtet sein, die Fördereinrichtung abhängig von einer Temperatur des Kühlmediums zu betreiben. So kann zwischen einer freien Konvektion (ohne Betrieb der Fördereinrichtung) und einer erzwungenen Konvektion (mit Betrieb der Fördereinrichtung) abhängig von der Temperatur des Kühlmediums gewechselt werden. In einer Ausgestaltungsvariante kann der Betrieb der Fördereinrichtung auch so gesteuert werden, dass für eine freie Konvektion die Fördereinrichtung mit kleinster möglicher Leistung betrieben wird. Dadurch werden störanfällige Anfahrvorgänge der Fördereinrichtung vermieden, wodurch die Zuverlässigkeit des Systems erhöht wird.

Je nach Temperatur des Kühlmediums und/oder des Fluids, welches über das Ventil in die erste Fluidleitung geleitet wird, kann auf die mindestens eine Fördereinrichtung verzichtet werden. Beispielsweise kann es zum Enteisen des Wärmeübertragers ausreichen, wenn die Temperatur des in die erste Fluidleitung geleiteten Fluids über dem Gefrierpunkt des Stoffs, der aus dem in der zweiten Fluidleitung strömenden Fluid durch Abkühlung ausgefällt werden soll (beispielsweise Wasser), liegt (beispielsweise mehr als 10 K, mehr als 20 K oder mehr als 50 K über dem Gefrierpunkt des Fluids in der zweiten Fluidleitung). Liegt jedoch die Temperatur des Kühlmediums (stark) unterhalb des Gefrierpunkt des auszufällenden Stoffs in dem Fluid in der zweiten Fluidleitung, ist eine Fördereinrichtung möglicherweise ebenfalls nicht notwendig. Ein zusätzlicher Abtransport erwärmten Kühlmediums ist aufgrund eines hohen Temperaturunterschieds zwischen Fluid in der zweiten Fluidleitung und Kühlmedium nicht notwendig. Beispielsweise kann bei einer Temperatur des Kühlmediums von weniger als 10 K, weniger als 20 K oder weniger als 50 K unterhalb des Gefrierpunkts des auszufällenden Stoffs in dem Fluid in der zweiten Fluidleitung auf eine Fördereinrichtung für das Kühlmedium verzichtet werden.

Ferner kann der erste und/oder zweite Wärmeübertrager so dimensioniert sein, d.h. die Größe der Oberfläche der jeweiligen zweiten Fluidleitung und/oder eine Größe und Anordnung optionaler Kühlrippen auf der jeweiligen zweiten Fluidleitung kann/können so dimensioniert sein, dass ein vereister Wärmeübertrager durch Abschalten einer Fördereinrichtung enteist werden kann. Andererseits können durch Betreiben der Fördereinrichtung Temperaturen in dem Fluid in der jeweiligen zweiten Fluidleitung (deutlich) unter dem Gefrierpunkt des auszufällenden Stoffs erreicht werden. Mit anderen Worten wird das Kühlmedium entweder durch eine erzwungene Konvektion (bei Betrieb der Fördereinrichtung) oder durch freie Konvektion (ohne Betrieb der Fördereinrichtung) bewegt. Selbstverständlich kann der erste und/oder zweite Wärmeübertrager so dimensioniert sein, dass auch ganz ohne Fördereinrichtung bei freier Konvektion der jeweilige Wärmeübertrager zum Entfeuchten eines in der jeweiligen zweiten Fluidleitung strömenden Fluids geeignet ist und auch allein durch das warme Fluid, das durch die jeweilige erste Fluidleitung strömt, enteist werden kann.

In einer weiteren Ausgestaltungsvariante kann ein Auslass der ersten Fluidleitung des ersten Wärmeübertragers mit einem Einlass der zweiten Fluidleitung des zweiten Wärmeübertragers fluidisch gekoppelt sein. Dies erlaubt, das über das Ventil in die erste Fluidleitung des ersten Wärmeübertragers eingeleitete Fluid in dem zweiten Wärmeübertrager, und insbesondere in dessen zweiter Fluidleitung, zu kühlen. Somit kann ein zu entfeuchtendes Gas als Fluid dienen, welches in die erste Fluidleitung des ersten Wärmeübertragers eingeleitet wird, um den ersten Wärmeübertrager zu enteisen.

Optional kann entsprechend ein Auslass der ersten Fluidleitung des zweiten Wärmeübertragers mit einem Einlass der zweiten Fluidleitung des ersten Wärmeübertragers fluidisch gekoppelt sein. Auch hier wird das über das Ventil in die erste Fluidleitung des zweiten Wärmeübertragers eingeleitete Fluid in dem ersten Wärmeübertrager, und insbesondere in dessen zweiter Fluidleitung, gekühlt. Dabei kann es sich ebenfalls um das zu entfeuchtende Gas handeln, welches durch die Steuerung und das Ventil wahlweise in die erste Fluidleitung des ersten Wärmeübertragers oder die erste Fluidleitung des zweiten Wärmeübertragers geleitet wird. Diese Anordnung erlaubt eine wechselweise Verwendung des ersten und zweiten Wärmeübertragers zum Entfeuchten des Gases bei gleichzeitiger Verwendung des zu entfeuchtendes Gases als Wärmequelle zum Enteisen des Wärmeübertragers, der gerade nicht zum Entfeuchten verwendet wird. Ferner ermöglicht diese Variante eine Gasentfeuchtungsvorrichtung, die lediglich ein (Umschalt-) Ventil benötigt und zwei der eingangs beschriebenen Wärmeübertrager. Dadurch ist die Gasentfeuchtungsvorrichtung besonders einfach im Aufbau, leicht zu warten und weist ein geringeres Gewicht auf als herkömmliche Gasentfeuchtungsvorrichtungen, insbesondere solche mit zusätzlicher Heizeinrichtung.

In einer anderen Ausgestaltungsvariante kann ein Auslass der ersten Fluidleitung des ersten Wärmeübertragers mit einem Einlass der zweiten Fluidleitung des ersten Wärmeübertragers fluidisch gekoppelt sein. Hierbei wird dasselbe Fluid nacheinander durch die erste und zweite Fluidleitung des ersten Wärmeübertragers geleitet. Beispielsweise fallen der Auslass der ersten Fluidleitung und der Einlass der zweiten Fluidleitung zusammen.

Beispielsweise kann ein Ende der ersten Fluidleitung des ersten Wärmeübertragers, das den Auslass der ersten Fluidleitung des ersten Wärmeübertragers bildet, vollständig von der zweiten Fluidleitung des ersten Wärmeübertragers umgeben sein. Dies ermöglicht eine Umkehrung einer Strömungsrichtung eines durch die erste Fluidleitung strömenden Fluids in einem von dem Einlass der zweiten Fluidleitung des ersten Wärmeübertragers gebildeten Bereich der zweiten Fluidleitung des ersten Wärmeübertragers. Nach Durchströmen der ersten Fluidleitung und Umlenkung strömt das Fluid in umgekehrter Richtung durch die zweite Fluidleitung.

Alternativ oder zusätzlich kann ein Ende der ersten Fluidleitung des zweiten Wärmeübertragers, das den Auslass der ersten Fluidleitung des zweiten Wärmeübertragers bildet, vollständig von der zweiten Fluidleitung des zweiten Wärmeübertragers umgeben sein. Dies ermöglicht ebenfalls eine Umkehrung einer Strömungsrichtung eines durch die erste Fluidleitung strömenden Fluids in einem von dem Einlass der zweiten Fluidleitung des zweiten Wärmeübertragers gebildeten Bereich der zweiten Fluidleitung des zweiten Wärmeübertragers. Nach Durchströmen der ersten Fluidleitung und Umlenkung strömt das Fluid in umgekehrter Richtung durch die zweite Fluidleitung.

Dieser Aufbau des ersten und/oder zweiten Wärmeübertragers ermöglicht eine kompakte Bauweise der Gasentfeuchtungsvorrichtung, da die Länge der ersten und zweiten Fluidleitung des jeweiligen Wärmeübertragers nahezu gleich groß sein kann und diese Länge die Größe der Gasentfeuchtungsvorrichtung maßgeblich bestimmt. Ein eventueller Längenunterschied besteht lediglich in dem Anschluss am Einlass der ersten Fluidleitung, dem Umlenkpunkt zwischen erster und zweiter Fluidleitung und/oder einem Anschluss am Auslass der zweiten Fluidleitung. Die überwiegende Länge der ersten Fluidleitung entspricht der der zweiten Fluidleitung, da sich beide Fluidleitungen in diesem Bereich überlappen.

Ebenfalls alternativ oder zusätzlich kann auch ein Auslass der zweiten Fluidleitung des ersten Wärmeübertragers mit einem Einlass der ersten Fluidleitung des zweiten Wärmeübertragers fluidisch gekoppelt sein. Mit anderen Worten sind der erste und zweite Wärmeübertrager in Reihe geschaltet.

Beispielsweise können der erste und zweite Wärmeübertrager gemäß der oben beschriebenen Ausgestaltungsvariante, in der der Auslass der ersten Fluidleitung mit einem Einlass der zweiten Fluidleitung des gleichen Wärmeübertragers fluidisch gekoppelt ist, ausgebildet sein und in Reihe geschaltet sein. Somit kann eine Entfeuchtung eines Gases in dem zweiten Wärmeübertrager stattfinden, während das zu entfeuchtende Gas den ersten Wärmeübertrager (in Strömungsrichtung durch die in Reihe geschalteten Wärmeübertrager) enteist. Hierbei strömt das vor der Entfeuchtung in dem zweiten Wärmeübertrager noch warme Gas sowohl durch die erste als auch die zweite Fluidleitung des ersten Wärmeübertragers, wodurch eine schnelle Enteisung erzielt wird. Um nun den zweiten Wärmeübertrager, der während des Entfeuchtungsprozesses vereist, zu enteisen, wird durch Umschalten des Ventils das warme Gas in den zweiten Wärmeübertrager (insbesondere dessen erste Fluidleitung) eingeleitet. Durch Anordnung eines zweiten Ventils, das eine fluidische Kopplung zwischen dem Auslass der zweiten Fluidleitung des ersten Wärmeübertragers mit dem Einlass der ersten Fluidleitung des zweiten Wärmeübertragers umschalten kann auf eine fluidische Kopplung des Auslasses der zweiten Fluidleitung des zweiten Wärmeübertragers mit dem Einlass der ersten Fluidleitung des ersten Wärmeübertragers, kann eine umgekehrte Reihenschaltung des ersten und zweiten Wärmeübertragers eingerichtet werden. Hierbei ist die Steuerung ferner dazu ausgelegt, auch das zweite Ventil wahlweise so zu steuern, dass die beiden Wärmeübertrager in der oben beschriebenen Art in jeder der beiden Schaltvarianten der Ventile in Reihe geschaltet sind, d.h. immer von innen nach außen durchströmt werden (also nach Durchströmen der ersten Fluidleitung ein Durchströmen der zweiten Fluidleitung desselben Wärmeübertragers erfolgt).

In einer anderen Ausgestaltungsvariante kann ein Auslass der zweiten Fluidleitung des ersten Wärmeübertragers mit einem Einlass der zweiten Fluidleitung des zweiten Wärmeübertragers fluidisch gekoppelt sein. Dies ermöglicht die wahlweise Verwendung des ersten oder zweiten Wärmeübertragers zur Entfeuchtung des in der zweiten Fluidleitung des jeweiligen Wärmeübertragers strömenden Fluids. Dabei wird das zu entfeuchtende Gas zunächst durch die zweite Fluidleitung des ersten Wärmeübertragers geleitet und anschließend in der zweiten Fluidleitung des zweiten Wärmeübertragers entfeuchtet. Um letzteren zu enteisen, wird die Fließrichtung des zu entfeuchtenden Gases umgekehrt, also zuerst in die zweite Fluidleitung des zweiten Wärmeübertragers geleitet und anschließend in die zweite Fluidleitung des ersten Wärmeübertragers, wo das Gas entfeuchtet wird.

Während der Enteisung des zweiten Wärmeübertragers wird ein Fluid über das Ventil in die erste Fluidleitung des zweiten Wärmeübertragers geleitet. Optional wird ein Volumenstrom eines Kühlmediums, das über die Außenseite der zweiten Fluidleitung des zweiten Wärmeübertragers strömt, begrenzt oder ganz gestoppt. Zum Enteisen des ersten Wärmeübertragers wird über das Ventil und mittels der Steuerung das Fluid in die erste Fluidleitung des ersten Wärmeübertragers geführt. Auch hier kann optional ein Volumenstrom eines Kühlmediums zur Kühlung des ersten Wärmeübertragers begrenzt oder gestoppt werden.

In einer weiteren Ausgestaltungsvariante kann ein Auslass der ersten Fluidleitung des ersten Wärmeübertragers mit einem Einlass der ersten Fluidleitung des zweiten Wärmeübertragers fluidisch gekoppelt sein. Dadurch strömt das Fluid der jeweils ersten Fluidleitung des ersten bzw. zweiten Wärmeübertragers nach Durchströmen des zugehörigen Wärmeübertragers in die erste Fluidleitung des jeweils anderen Wärmeübertragers. Während der Enteisung des jeweiligen Wärmeübertragers nimmt das Fluid in der entsprechenden ersten Fluidleitung Wärmeenergie auf, sodass es in der ersten Fluidleitung des anderen Wärmeübertragers, den es anschließend durchströmt, nur eine geringe oder gar keine Erwärmung des Gases in der zugehörigen zweiten Fluidleitung hervorruft. Dadurch wird der dort gerade stattfindende Entfeuchtungsprozess nicht oder nur sehr gering gestört. Insbesondere die kleinere Oberfläche der ersten Fluidleitung in der sie umgebenden zweiten Fluidleitung im Vergleich zu der größeren Oberfläche der zweiten Fluidleitung gegenüber dem Kühlmedium gewährleistet eine ausreichende Kühlung des Gases zur Entfeuchtung.

Das Fluid, das durch die erste Fluidleitung strömt, kann jedes beliebige Fluid sein, solange es die erforderliche Temperatur zum Enteisen aufweist. Beispielsweise kann eine Flüssigkeit oder ein Gas verwendet werden. Selbstverständlich kann auch das zu entfeuchtende Gas verwendet werden, bevor es entfeuchtet wird oder in einem anderen Druckzustand, in dem es eine höhere Temperatur aufweist als vor dem Entfeuchten.

In einer weiteren Ausgestaltungsvariante können der erste und zweite Wärmeübertrager als Einheit betrachtet werden, wobei diese Einheit mit einer entsprechend gleich ausgestatteten Einheit zweier Wärmeübertrager in Reihe geschaltet ist. Beispielsweise kann ein Auslass der zweiten Fluidleitung des zweiten Wärmeübertragers mit einem Einlass einer ersten Fluidleitung eines dritten Wärmeübertragers (der zweiten Einheit) fluidisch gekoppelt sein und ein Auslass einer ersten Fluidleitung des dritten Wärmeübertragers kann mit einem Einlass der zweiten Fluidleitung des ersten Wärmeübertragers fluidisch gekoppelt sein. Dadurch muss die Strömungsrichtung des Gases und/oder Fluids durch die erste und zweite Fluidleitung des ersten und zweiten Wärmeübertragers nicht geändert werden.

Gemäß einer Ausgestaltungsvariante kann die Gasentfeuchtungsvorrichtung einen Kühlmediumkanal umfassen. Dabei kann auch der erste Wärmeübertrager und/oder der zweite Wärmeübertrager in dem Kühlmediumkanal angeordnet sein. Dabei kann es sich um einen Stauluftkanal handeln oder einen anderen Kühlmediumkanal, durch den ein Kühlmedium strömt, ohne eine zur Gasentfeuchtungsvorrichtung gehörende Fördereinrichtung aufzuweisen. Optional kann in oder an dem Kühlmediumkanal die Fördereinrichtung für das erste und/oder zweite Kühlmedium angeordnet sein.

In einer weiteren Ausgestaltung kann der Kühlmediumkanal zumindest in einem Abschnitt aus einem Außenzylinder und einem in dem Außenzylinder konzentrisch angeordneten Innenzylinder bestehen. Der Außenzylinder und der Innenzylinder bilden dabei einen Ringspalt, der den Kühlmediumkanalabschnitt bildet. Der Ringspalt kann mit einem weiteren Abschnitt des Kühlmediumkanals verbunden sein, der beispielsweise die Fördereinrichtung umfasst.

Ferner kann der erste Wärmeübertrager spiralförmig geformt sein und/oder der zweite Wärmeübertrager spiralförmig geformt sein. So kann/können der erste Wärmeübertrager und/oder der zweite Wärmeübertrager in dem von dem Außenzylinder und dem Innenzylinder gebildeten Ringspalt angeordnet sein. Dies erlaubt eine sehr kompakte Bauweise der Gasentfeuchtungsvorrichtung.

Gemäß einer weiteren Variante können der Außenzylinder und der Innenzylinder jeweils an einer sich entsprechenden Stirnseite geschlossen sein. Dabei kann die Stirnseite des Außenzylinders von der entsprechenden Stirnseite des Innenzylinders beabstandet sein. Dadurch wird zwischen den beiden Stirnseiten ein weiterer Abschnitt des Kühlmediumkanals gebildet sein. Ferner kann zumindest der Außenzylinder an einer der Stirnseite gegenüberliegenden Seite geöffnet sein, und der von dem Außenzylinder und dem Innenzylinder gebildete Ringspalt eine Kühlmediumeintrittsöffnung bilden. So lässt sich Kühlmedium von der Eintrittsöffnung durch den Ringspalt über den/die Wärmeübertrager leiten, wobei die Gasentfeuchtungsvorrichtung kompakt und gleichzeitig robust ist.

In noch einer weiteren Ausgestaltungsvariante kann die Gasentfeuchtungsvorrichtung ferner mindestens einen ersten Sensor, der in dem ersten Wärmeübertrager angeordnet ist, und/oder mindestens einen zweiten Sensor, der in dem zweiten Wärmeübertrager angeordnet ist, umfassen. Bei dem/den Sensor/en kann es sich um einen Temperatursensor, einen Drucksensor, einen Infrarotsensor, einen Bildsensor oder ähnliches handeln, womit sich ein Zustand in dem Wärmeübertrager ermitteln lässt, insbesondere ein Vereisungszustand. Entsprechend kann die Steuerung ferner dazu eingerichtet sein, ein Signal des mindestens einen ersten Sensors und/oder des mindestens einen zweiten Sensors zu empfangen und zu ermitteln, ob die zweite Fluidleitung des zugehörigen Wärmeübertragers vereist ist.

In einer weiteren Ausgestaltungsvariante kann die Gasentfeuchtungsvorrichtung ferner mindestens einen Sammelbehälter für entfeuchtetes Gas, der mit einem Auslass der zweiten Fluidleitung mindestens eines des ersten Wärmeübertragers und des zweiten Wärmeübertragers fluidisch gekoppelt ist, umfassen. Alternativ oder zusätzlich kann die Gasentfeuchtungsvorrichtung mindestens einen Sammelbehälter für Wasser, der mit einem Auslass für Wasser mindestens einer der ersten Fluidleitung und zweiten Fluidleitung mindestens eines des ersten Wärmeübertragers und des zweiten Wärmeübertragers fluidisch gekoppelt ist, umfassen. Der Auslass für Wasser (unabhängig von welcher Fluidleitung) kann ein eigenständiges Ventil oder anderer Auslasspunkt in der zugehörigen Fluidleitung sein. Alternativ oder zusätzlich kann der Auslass für Wasser auch an einem Einlass für Fluid in die entsprechende Fluidleitung integriert sein.

Optional kann der Auslass für Wasser an einer Position angeordnet sein, die im später eingebauten Zustand des Wärmeübertragers den tiefsten Punkt innerhalb der Gasentfeuchtungsvorrichtung bildet, sodass Wasser (geschmolzenes Eis aus der ersten und/oder zweiten Fluidleitung) durch die Gravitation zu dem Auslass für Wasser fließt.

So kann in jeder Ausgestaltungsvariante die Gasentfeuchtungsvorrichtung optional so gestaltet sein, dass das beim Enteisen anfallende Schmelzwasser durch die Schwerkraft aus dem jeweiligen Wärmeübertrager abfließt. Mit anderen Worten ist die erste und/oder zweite Fluidleitung so angeordnet, dass sie ein Gefälle aufweist, wodurch das geschmolzene Eis durch die Schwerkraft abfließt. Beispielsweise kann im Fall eines spiralförmig geformten Wärmeübertragers die Spirale eine Steigung aufweisen, die es dem Schmelzwasser ermöglicht, abzufließen.

Gemäß einem weiteren Aspekt umfasst ein Transportmittel eine Gasentfeuchtungsvorrichtung gemäß dem ersten Aspekt und/oder einer der zugehörigen Varianten.

Die hier beschriebenen Ausgestaltungen, Varianten und Aspekte können ferner beliebig kombiniert werden, sodass weitere nicht explizit beschriebene Ausgestaltungsvarianten umfasst sind.

Nachfolgend werden Ausführungsbeispiele der Erfindung anhand der Zeichnungen näher beschrieben.
- Figur 1: zeigt schematisch eine Übersicht einer Gasentfeuchtungsvorrichtung,
- Figur 2: zeigt schematisch einen ersten Wärmeübertrager und zweiten Wärmeübertrager gemäß einer Ausgestaltungsvariante,
- Figur 3: zeigt schematisch einen Wärmeübertrager gemäß einer weiteren Ausgestaltungsvariante,
- Figur 4: zeigt schematisch einen ersten Wärmeübertrager und zweiten Wärmeübertrager gemäß noch einer weiteren Ausgestaltungsvariante,
- Figur 5: zeigt schematisch eine Übersicht einer weiteren Gasentfeuchtungsvorrichtung,
- Figur 6: zeigt schematisch einen ersten Wärmeübertrager und zweiten Wärmeübertrager gemäß einer weiteren Ausgestaltungsvariante,
- Figur 7: zeigt schematisch einen Wärmeübertrager gemäß noch einer weiteren Ausgestaltungsvariante,
- Figur 8: zeigt schematisch einen ersten Wärmeübertrager und zweiten Wärmeübertrager gemäß einer weiteren Ausgestaltungsvariante,
- Figur 9: zeigt schematisch einen Kühlmediumkanal, in dem beispielhaft ein Wärmeübertrager angeordnet ist, und
- Figur 10: zeigt schematisch ein Transportmittel mit einer Gasentfeuchtungsvorrichtung.

Gemäß der vorliegenden Erfindung wird eine Gasentfeuchtungsvorrichtung mit wahlweiser Zuführung eines warmen Fluids in einen ersten oder zweiten Wärmeübertrager beschrieben und ferner ein Transportmittel mit einer derartigen Gasentfeuchtungsvorrichtung beschrieben.

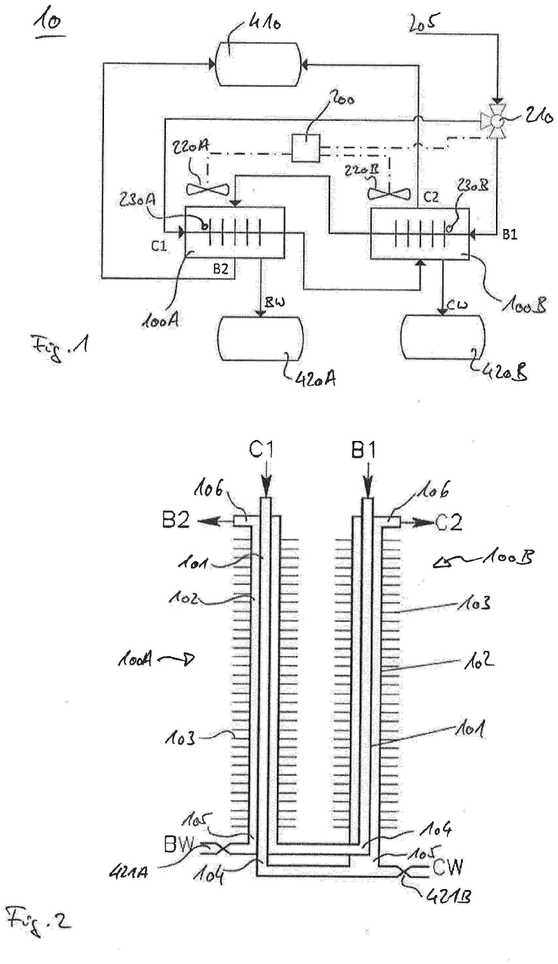

Figur 1 zeigt schematisch eine Übersicht einer Gasentfeuchtungsvorrichtung 10, die einen ersten Wärmeübertrager 100A und einen zweiten Wärmeübertrager 100B umfasst. Dabei wird ein zu entfeuchtendes Gas von einer Quelle 205 zu einem Ventil 210 der Gasentfeuchtungsvorrichtung 10 geführt. Das Ventil 210 kann zwei Positionen einnehmen, wobei in einer ersten Position das zu entfeuchtende Gas (oder ein beliebiges anderes Fluid) zu dem ersten Wärmeübertrager 100A geleitet wird, während es in der zweiten Position des Ventils 210 zu dem zweiten Wärmeübertrager 100B geleitet wird. Nach Durchströmen des ersten bzw. zweiten Wärmeübertragers 100A, 100B strömt das Fluid zu dem jeweils anderen Wärmeübertrager 100A, 100B und von dort in einen Sammelbehälter 410 für entfeuchtetes Gas.

Jeder des ersten und zweiten Wärmeübertragers 100A, 100B ist an einen Sammelbehälter für Wasser (420A, 420B) über einen entsprechenden Anschluss BW, CW angeschlossen. Selbstverständlich kann auch ein einzelner gemeinsamer Sammelbehälter 420 für Wasser vorgesehen sein. Der Sammelbehälter 420 für Wasser dient der Aufnahme von Wasser, welches aus dem zu entfeuchtenden Gas in dem jeweiligen Wärmeübertrager 100A, 100B auskondensiert wird.

Zudem kann jedem Wärmeübertrager 100A, 100B eine Fördereinrichtung 220A, 220B zur Förderung eines Kühlmediums zugeordnet sein. Die Fördereinrichtung 220 ermöglicht ein Überströmen des zugehörigen Wärmeübertragers 100 mit einem Kühlmedium (nicht gesondert dargestellt), welches eine Kühlung des zu entfeuchtenden Gases innerhalb des jeweiligen Wärmeübertragers 100 ermöglicht. Selbstverständlich kann auch eine einzelne Fördereinrichtung 220 vorgesehen sein und der Volumenstrom des Kühlmediums wird durch eine andere Vorrichtung, beispielsweise eine Klappe o. ä., zu einem der beiden Wärmeübertrager 100 geleitet.

Zumindest das Ventil 210 und optional auch die Fördereinrichtung 220A, 220B oder jede der Fördereinrichtungen 220 kann durch eine Steuerung 200 angesteuert werden. So kann die Steuerung 200 das Ventil 210 in die erste oder zweite Position der beiden Positionen bringen, um einen Fluidstrom (Gasstrom) von der Quelle 205 zu einem der Wärmeübertrager 100 einzustellen. Entsprechend kann die Steuerung 200 einen Volumenstrom des Kühlmediums durch jede der Fördereinrichtungen 220 einstellen (einschließlich dem Stoppen des Kühlmediums). Hierfür kann die Steuerung 200 optional mit einem Sensor 230A, 230B verbunden sein, der in dem jeweiligen Wärmeübertrager 100A, 100B angeordnet ist und ein Signal der Steuerung 200 zur Verfügung stellt, womit die Steuerung 200 ermitteln kann, ob eine Fluidleitung innerhalb des jeweiligen Wärmeübertragers 100 vereist ist.

In Figur 2 sind der erste und zweite Wärmeübertrager 100A, 100B gemäß einer Ausgestaltung schematisch detaillierter dargestellt. Jeder der Wärmeübertrager 100A, 100B weist eine erste Fluidleitung 101 und eine zweite Fluidleitung 102 auf. Dabei umgibt die zweite Fluidleitung 102 die erste Fluidleitung 101 zumindest abschnittsweise. Beispielsweise kann es sich bei der ersten und zweiten Fluidleitung 101, 102 um zwei konzentrisch angeordnete Rohrleitungen handeln. Der erste Wärmeübertrager 100A ist dazu eingerichtet, ein in der zweiten Fluidleitung 102 befindliches Fluid mit einem ersten Kühlmedium auf einer Außenseite der zweiten Fluidleitung 102 thermisch zu koppeln. Entsprechend ist auch der zweite Wärmeübertrager 100B dazu eingerichtet, ein in der zweiten Fluidleitung 102 befindliches Fluid mit einem Kühlmedium auf dessen Außenseite thermisch zu koppeln. Hierfür ist der entsprechende Wärmeübertrager 100A, 100B mit Kühlrippen 103 oder anderen Objekten, die eine Oberfläche der Außenseite der zweiten Fluidleitung 102 vergrößern, ausgestattet.

Die Wärmeübertrager 100A, 100B mit ihren Anschlüssen C1, C2 bzw. B1, B2 entsprechen der Anordnung aus Figur 1. Somit kann mittels des Ventils 210 ein zu entfeuchtendes Gas entweder in den Einlass C1 der ersten Fluidleitung 101 des ersten Wärmeübertragers 100A oder in den Einlass B1 der ersten Fluidleitung 101 des zweiten Wärmeübertragers 100B eingeleitet werden.

Nach Durchströmen der ersten Fluidleitung 101 gelangt in der Ausgestaltung gemäß Figur 2 das zu entfeuchtende Gas über den Auslass 104 der ersten Fluidleitung 101 des jeweiligen Wärmeübertragers 100 zu einem Einlass 105 der zweiten Fluidleitung 102 des anderen Wärmeübertragers 100. Mit anderen Worten sind der Auslass 104 und der Einlass 105 fluidisch gekoppelt. Diese fluidische Kopplung kann über ein Stück Fluidleitung erfolgen, oder kann durch einen direkten Übergang von Auslass 104 zu Einlass 105 implementiert sein.

In der zweiten Fluidleitung 102 des nachfolgenden Wärmeübertragers 100 (beispielsweise nach Einleitung des zu entfeuchtenden Gases bei C1 gelangt das Gas in den Einlass 105 des zweiten Wärmeübertragers 100B und strömt zu dem Ausgang C2) wird das Gas entfeuchtet. Dies erfolgt durch eine Kühlung des Gases innerhalb der zweiten Fluidleitung 102 des zweiten Wärmeübertragers 100B durch das an der Außenseite der Fluidleitung 102 vorhandene Kühlmedium. Die Kühlung wird durch die Kühlrippen 103 beschleunigt. Um einen hohen Trocknungsgrad zu erreichen, wird das Gas unterhalb des Gefrierpunkts von Wasser gekühlt. Dabei kann es zu einer Eisbildung innerhalb der zweiten Fluidleitung 102 kommen. Insbesondere an der Innenseite der zweiten Fluidleitung 102, die von dem Kühlmedium gekühlt wird, wird es vermehrt zu einer Eisbildung kommen. Um zu verhindern, dass der Querschnitt der zweiten Fluidleitung 102 des zweiten Wärmeübertragers 100B vollständig vereist ist und somit die Entfeuchtung zum Erliegen kommt, schaltet das Ventil 210 (beispielsweise aufgrund einer Ansteuerung durch die Steuerung 200) um. Nun wird das zu entfeuchtende Gas am Einlasspunkt B1 des zweiten Wärmeübertragers 100B in dessen erste Fluidleitung 101 eingeleitet. Das noch warme Fluid (Gas) erwärmt die erste Fluidleitung 101 des zweiten Wärmeübertragers 100B und ermöglicht somit ein Enteisen der zweiten Fluidleitung 102 des zweiten Wärmeübertragers 100B. Nach Verlassen des Auslasses 104 der ersten Fluidleitung 101 wird das zu entfeuchtende Gas in die zweite Fluidleitung 102 an deren Einlass 105 des ersten Wärmeübertragers 100A geleitet. Dort kann es mittels der Kühlrippen 103 und des an der Außenseite anliegenden Kühlmediums gekühlt und somit entfeuchtet werden. Das zu entfeuchtende Gas verlässt den ersten Wärmeübertrager 100A am Auslass 106 der zweiten Fluidleitung 102 (siehe Auslasspunkt B2). Nach einer Vereisung des ersten Wärmeübertragers 100A, schaltet das Ventil 210 wieder um und der erste oben beschriebene Vorgang wird wiederholt, bei dem das Gas in dem zweiten Wärmeübertrager 100B entfeuchtet wird.

Zum Entfernen des auskondensierten Wassers aus dem jeweiligen Wärmeübertrager 100A, 100B sind ein erster Wasserauslass 421A und ein zweiter Wasserauslass 421B, beispielsweise am Einlass 105 der jeweiligen zweiten Fluidleitung 102, vorgesehen. Diese können mit dem in Figur 1 dargestellten Wassersammelbehälter 420 verbunden sein.

Die in Figur 2 dargestellte Ausgestaltungsvariante der Gasentfeuchtungsvorrichtung 10 erlaubt eine erste Betriebsart, bei der die beiden Wärmeübertrager 100A, 100B abwechselnd betrieben werden. Mit anderen Worten wird ein Wärmeübertrager 100A zum Entfeuchten des Gases verwendet, während ein anderer Wärmeübertrager 100B durch das in der ersten Fluidleitung 101 strömende Gas enteist wird. So wird immer nur ein Pfad durch die beiden Wärmeübertrager 100A, 100B von dem Gas durchströmt, d.h. entweder Pfad B1-B2 oder Pfad C1-C2, wie es in Bezug auf Figur 1 beschrieben wurde. Das Enteisen des entsprechenden Wärmeübertragers 100 kann durch Steuerung einer Fördereinrichtung 220 für das Kühlmedium unterstützt werden, beispielsweise durch Reduzierung oder Abschaltung eines Volumenstroms des Kühlmittels.

In einer zweiten Betriebsart werden beide Wärmeübertrager 100A, 100B gleichzeitig betrieben, wobei der Enteisungsvorgang insbesondere durch die Steuerung der Fördereinrichtung 220 für das Kühlmedium erfolgt. Hierbei kann/können dasselbe Gas oder zwei verschiedene Gase gleichzeitig entfeuchtet werden. In diesem Fall ist die Umschaltung und das Ventil 210, wie es in Bezug auf Figur 1 beschrieben wurde, nicht erforderlich.

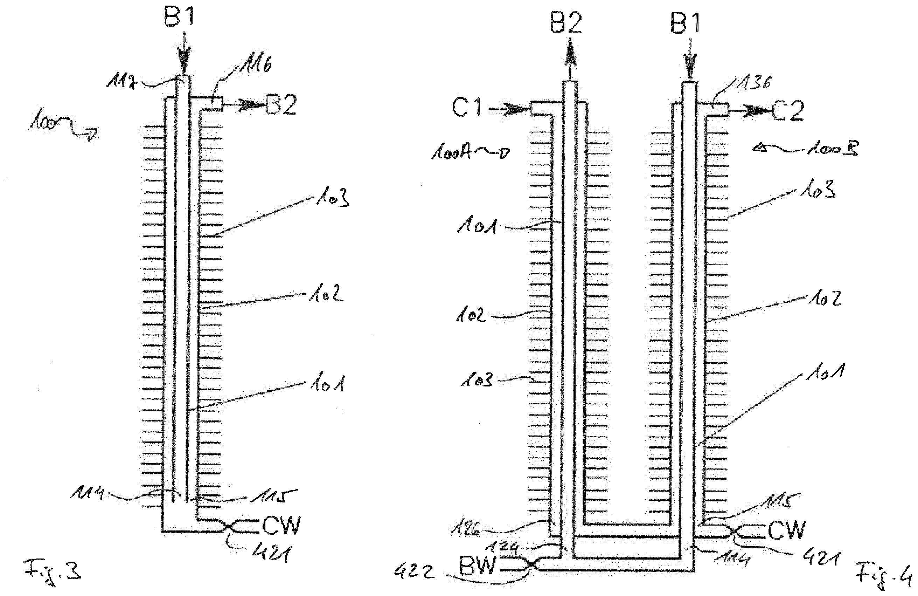

In der in Figur 3 dargestellten Ausgestaltungsvariante ist der Auslass 114 der ersten Fluidleitung 101 eines Wärmeübertragers 100 mit einem Einlass 105 der zweiten Fluidleitung 102 desselben Wärmeübertragers fluidisch gekoppelt. Mit anderen Worten strömt das zu entfeuchtende Gas vom Einlass 117 der ersten Fluidleitung 101 durch die erste Fluidleitung 101 und anschließend nach einer Umkehr der Strömungsrichtung vom Einlass 115 der zweiten Fluidleitung 102 zu deren Auslass 116 (siehe Auslasspunkt B2). Zu beachten ist hier, dass der Auslasspunkt B2 nicht dem in Figur 1 gezeigten Auslasspunkt B2 entspricht, da er am selben Wärmeübertrager 100 angeordnet ist.

Bei der in Figur 3 dargestellten Variante kann ein einzelner Wärmeübertrager 100 verwendet werden, der abwechselnd Gas entfeuchtet und dann enteist wird. Der Enteisungsvorgang erfolgt dabei durch Reduzierung oder Abschaltung eines Kühlmediumvolumenstroms. Dies entspricht der oben beschriebenen zweiten Betriebsart mit nur einem Wärmeübertrager 100 und einem zu entfeuchtenden Gas. Dadurch wird zwar ein sehr einfacher Aufbau der Gasentfeuchtungsvorrichtung erreicht. Jedoch sind die Temperaturdifferenzen zwischen Kühlmedium und dem zu entfeuchtenden Gas deutlich eingeschränkter, um Kondensation und Enteisung robust zu betreiben.

Alternativ können zwei der in Figur 3 dargestellten Wärmeübertrager in Reihe geschaltet sein und das zu entfeuchtende Gas in seinem warmen Zustand immer erst in den Wärmeübertrager 100 geleitet werden, der enteist werden muss. Nach Verlassen des Wärmeübertragers 100 am Auslass 116 der zweiten Fluidleitung 102 wird das Gas in den weiteren (beispielsweise zweiten) Wärmeübertrager 100 geleitet. Hierfür ist der Auslass 116 der zweiten Fluidleitung 102 mit dem Einlass 117 der ersten Fluidleitung 101 eines weiteren Wärmeübertragers 100 fluidisch gekoppelt. Das in dem weiteren Wärmeübertrager 100 strömende Gas ist zwar in der ersten Fluidleitung 101 noch warm, wurde aber durch den Enteisungsprozess im vorangegangenen Wärmeübertrager 100 gekühlt. Dadurch kann es in dem zweiten Wärmeübertrager 100 gut entfeuchtet werden. Bei dieser Ausgestaltungsvariante ist ein weiteres Ventil erforderlich, welches den Auslass 116 der zweiten Fluidleitung 102 mit dem Einlass 117 der ersten Fluidleitung 101 des anderen Wärmeübertragers 100 oder mit einem Sammelbehälter 410 für entfeuchtetes Gas fluidisch koppelt. Auch dieses Ventil kann durch die Steuerung 200 (Figur 1) gesteuert werden.

Zum Entfernen des auskondensierten Wassers weist der Wärmeübertrager 100 einen Wasserauslass 421 auf.

Figur 4 zeigt eine weitere Ausgestaltungsvariante, in der das zu entfeuchtende Gas entweder nur in der ersten Fluidleitung 101 des ersten und zweiten Wärmeübertragers 100A, 100B strömt und entfeuchtet wird oder in der zweiten Fluidleitung 102 beider Wärmeübertrager 100A, 100B strömt und entfeuchtet wird. Da die Anschlusspunkte B1, B2 sowie C1, C2 denen aus Figur 1 entsprechen, wird das zu entfeuchtende Gas immer nur in einer der beiden Fluidleitungen 101, 102 beider Wärmeübertrager 100 strömen. Auch hier kann das zu entfeuchtende Gas zunächst einen Wärmeübertrager 100 enteisen, während es im anderen Wärmeübertrager 100 entfeuchtet wird.

Da in beiden Fluidleitungen 101, 102 auskondensiertes Wasser anfällt, ist auch jede der beiden Fluidleitungen 101, 102 mit einem Wasserauslass 421, 422 ausgestattet. Alternativ kann das Fluid, welches durch die Anschlusspunkte B1 und B2 durch die jeweils erste Fluidleitung 101 strömt, auch ein anderes Fluid (Flüssigkeit oder Gas) sein als das zu entfeuchtende Gas. Dadurch kann der Wasserauslass 422 im unteren Bereich 124 der ersten Fluidleitung 101 des ersten Wärmeübertragers 100A entfallen. Jedoch kann in diesem Fall das zu entfeuchtende Gas zwischen den Anschlusspunkten C1 und C2 nur dann entfeuchtet werden, wenn der Enteisungsvorgang durch das Fluid zwischen den Anschlusspunkten B1 und B2 abgeschlossen ist. Somit ist eine kontinuierliche Entfeuchtung des Gases nicht möglich. Jedoch ermöglicht der Einsatz einer Flüssigkeit, welche durch die jeweilige erste Fluidleitung 101 strömt, einen größeren Wärmestrom von der jeweiligen ersten Fluidleitung 101 in die jeweilige zweite Fluidleitung 102, wodurch der Enteisungsvorgang gegenüber der Variante, bei der Gas durch die jeweilige erste Fluidleitung 101 strömt, stark beschleunigt werden kann.

Optional kann auch die in Figur 4 dargestellte Einheit (ohne den Wasserauslass 422 (BW)) dupliziert werden und mit der in Figur 4 dargestellten Wärmeübertragereinheit in Reihe geschaltet werden. Mit anderen Worten würde nach Durchströmen der ersten Fluidleitung (Anschlusspunkt B2) eine fluidische Kopplung mit dem Einlasspunkt der zweiten Fluidleitung (Anschlusspunkt C1) erfolgen. Dadurch würden die Anschlusspunkte B1, B2 sowie C1, C2 an den entsprechenden Enden der in Reihe geschalteten Wärmeübertragereinheiten denen aus Figur 1 entsprechen.

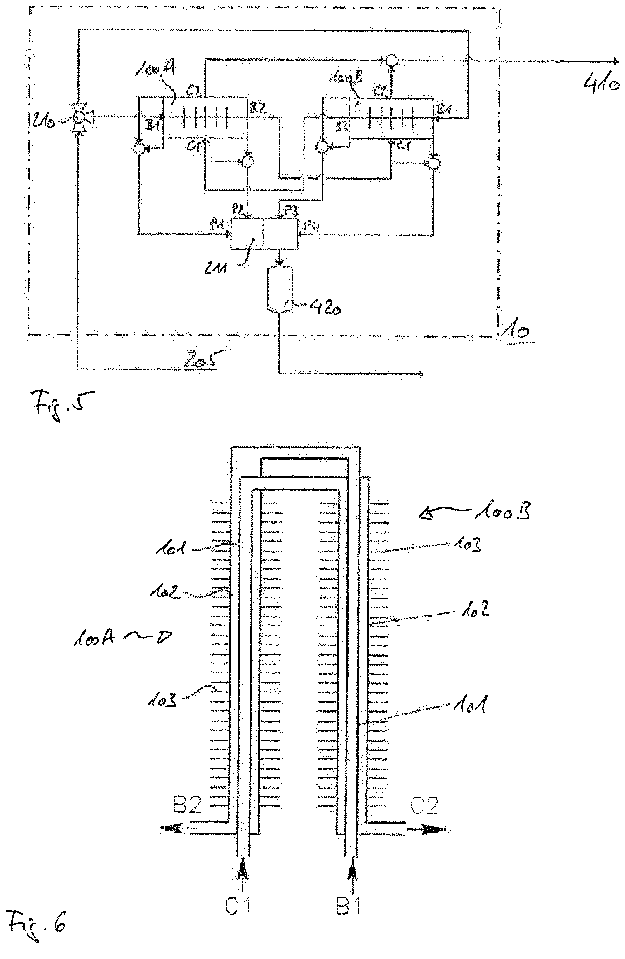

Figur 5 zeigt schematisch eine Übersicht einer weiteren Gasentfeuchtungsvorrichtung 10. Diese Gasentfeuchtungsvorrichtung 10 entspricht in großen Teilen der Gasentfeuchtungsvorrichtung 10 aus Figur 1. Daher sind gleiche Elemente mit gleichen Bezugszeichen versehen und deren Beschreibung wird hier nicht wiederholt. Um Figur 5 übersichtlicher zu halten, wurden zudem bestimmte Komponenten, wie zum Beispiel die Steuerung 200, die Fördereinrichtungen 220 und Sensoren 230, nicht dargestellt, obwohl sie auch optionale Teile der in Figur 5 dargestellten Gasentfeuchtungsvorrichtung 10 sein können.

Jeder Wärmeübertrager 100A, 100B kann mit mindestens einem Drainageanschluss für Kondenswasser oder Schmelzwasser versehen sein. In Figur 5 sind jeweils zwei Drainageanschlüsse für Kondenswasser oder Schmelzwasser dargestellt, die in eine Leitung zusammengeführt werden. Dies ist durch kreisförmige Zusammenführungselemente in Figur 5 dargestellt. Die so zusammengefassten Drainageanschlüsse werden zu einem zweiten Ventil 211 geführt, wo sie jeweils an einem Ventilanschluss P1, P2, P3 oder P4 angeschlossen sind. Das Ventil 211 ist dazu eingerichtet, jeweils nur einen Drainageleitungspfad zu öffnen. Mit anderen Worten wird immer nur eine Drainageleitung durch das Ventil 211 mit dem Sammelbehälter 420 für Wasser fluidisch gekoppelt.

Das Ventil 211 kann durch die Steuerung 200 (siehe Figur 1) gesteuert werden, sodass die Steuerung 200 die fluidische Kopplung eines Ventilanschlusses P1, P2, P3 oder P4 (also eines Drainageleitungspfads) mit dem Sammelbehälter 420 vornimmt. Alternativ kann das Ventil 211 auch eigenständig gesteuert werden. Beispielsweise kann sich das Ventil kontinuierlich drehen, sodass jeder Ventilanschluss P1, P2, P3 oder P4 nacheinander für ein definiertes Zeitfenster geöffnet ist, d.h. mit dem Sammelbehälter 420 für Wasser fluidisch gekoppelt ist.

Figur 6 zeigt schematisch einen ersten Wärmeübertrager 100A und zweiten Wärmeübertrager 100B gemäß einer weiteren Ausgestaltungsvariante. Diese Ausgestaltungsvariante aus Figur 6 entspricht größtenteils der Ausgestaltungsvariante aus Figur 2. Deshalb sind gleiche Elemente mit gleichen Bezugszeichen versehen und deren Beschreibung wird hier nicht wiederholt.

Im Unterschied zu der Ausgestaltungsvariante aus Figur 2 sind in der in Figur 6 dargestellten Ausgestaltungsvariante die Wärmeübertrager 100A, 100B so angeordnet, dass die Anschlüsse B1, B2, C1 und C2 unten liegen. Insbesondere im in der Gasentfeuchtungsvorrichtung 10 eingebauten Zustand liegen die Anschlüsse B1, B2, C1 und C2 unten. Dadurch wird Kondenswasser oder Schmelzwasser durch die Schwerkraft zu den Fluidanschlüssen B1, B2, C1 und C2 geleitet und kann dort trainiert werden. Somit kann auf die gesonderten Wasserauslässe 421 (siehe Figur 2) verzichtet werden und der Aufbau der Wärmeübertrager 100A, 100B sowie der gesamten Gasentfeuchtungsvorrichtung 10 vereinfacht sich. Die Wasserdrainage kann dabei gemäß einer der Gasentfeuchtungsvorrichtungen 10, wie sie in den Figuren 1 und 5 dargestellt sind, erfolgen.

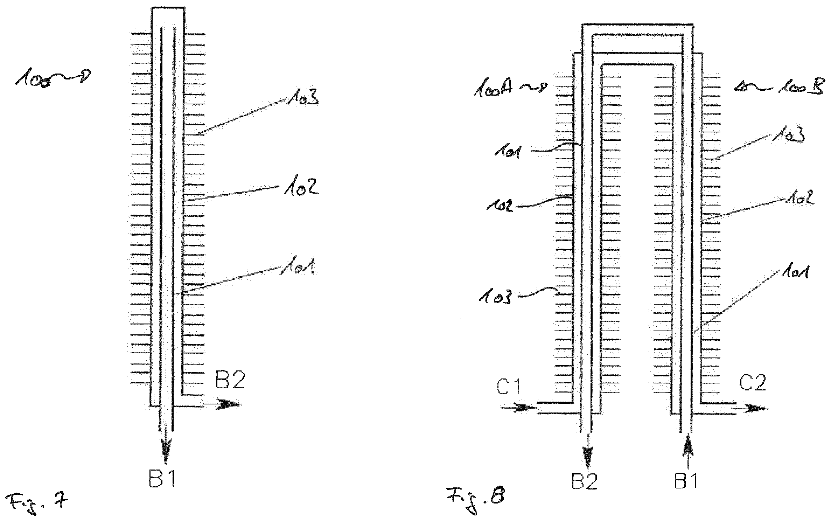

Figur 7 zeigt schematisch einen Wärmeübertrager 100 gemäß noch einer weiteren Ausgestaltungsvariante. Der Wärmeübertrager 100 aus Figur 7 entspricht größtenteils dem Wärmeübertrager 100 aus Figur 3. Auch hier sind gleiche Elemente mit gleichen Bezugszeichen versehen und werden nicht beschrieben, um eine Wiederholung zu vermeiden. Die Fluidanschlüsse B1, B2 sind hier jedoch so angeordnet, dass sie unten liegen, wodurch Kondenswasser oder Schmelzwasser durch die Schwerkraft drainiert werden kann. Insbesondere wird das Kondenswasser oder Schmelzwasser an dem Anschluss B2 anfallen und kann dort drainiert werden.

Figur 8 zeigt schematisch einen ersten Wärmeübertrager 100A und zweiten Wärmeübertrager 100B gemäß einer weiteren Ausgestaltungsvariante. Diese Anordnung entspricht größtenteils der Anordnung aus Figur 4, wobei gleiche Elemente mit gleichen Bezugszeichen gekennzeichnet sind und nicht beschrieben werden, um Wiederholungen zu vermeiden. Die Fluidanschlüsse B1, B2, C1 und C2 liegen unten, sodass Kondenswasser oder Schmelzwasser durch die Schwerkraft drainiert werden kann. Auch hier wird der Aufbau der Wärmeübertrager 100 und somit der Gasentfeuchtungsvorrichtung 10 vereinfacht. Insbesondere die Wasseranschlüsse 421, 422 (siehe Figur 4) sind nicht erforderlich.

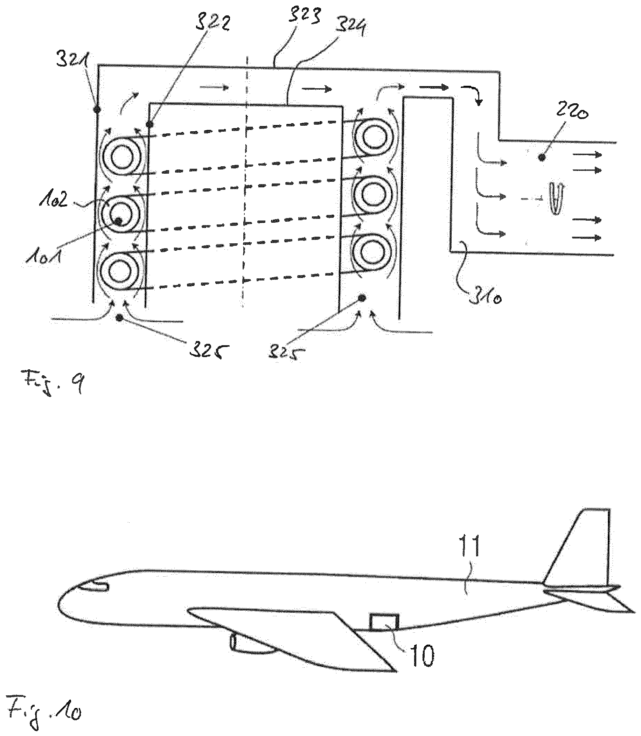

Figur 9 zeigt schematisch einen Kühlmediumkanal 310, in dem beispielhaft ein Wärmeübertrager 100 angeordnet ist. Der Kühlmediumkanal 310 ist zumindest in einem Abschnitt aus einem Außenzylinder 321 und einem Innenzylinder 322 gebildet. Diese konzentrisch angeordneten Zylinder 321, 322 formen einen Ringspalt, in dem der Wärmeübertrager 100 angeordnet sein kann. Beispielsweise sind die erste und zweite Fluidleitung 101, 102 des Wärmeübertragers 100 spiralförmig, wobei die Spirale einen Durchmesser aufweist, der einem mittleren Durchmesser des Luftspaltes (Ringspalts) entspricht.

Selbstverständlich kann auch ein zweiter Wärmeübertrager 100 in dem Ringspalt angeordnet sein. Dabei könnte beispielsweise die Steigung der Spirale eines Wärmeübertragers vergrößert werden, sodass beide durch die beiden Wärmeübertrager gebildeten Spiralen ineinander angeordnet werden können. So würden beispielsweise in der in Figur 9 dargestellten Schnittansicht jeder Querschnitt der ersten und zweiten Fluidleitung 101, 102 abwechselnd dem ersten Wärmeübertrager 100A und dem zweiten Wärmeübertrager 100B zugeordnet sein.

Auf einer Stirnseite 323 des Außenzylinders 321 kann dieser verschlossen sein. Auch der Innenzylinder 322 kann auf einer entsprechenden Stirnseite 324 verschlossen sein, wobei die beiden Stirnseiten 323, 324 voneinander beabstandet sind, sodass ein Strömungskanal für das Kühlmedium gebildet wird. Auf einer gegenüberliegenden Seite kann zumindest der Außenzylinder 321 geöffnet sein, sodass der Ringspalt eine Kühlmediumeintrittsöffnung 325 aufweist. Möglichst an den geschlossenen Stirnseiten 323, 324 kann ein weiterer Abschnitt des Kühlmediumkanals 310 angeschlossen sein, in dem beispielsweise eine Fördereinrichtung 222 angeordnet ist.

Alternativ kann der Außenzylinder 321 auf beiden Seiten geöffnet sein. Dadurch kann das Kühlmedium durch freie Konvektion bewegt werden, also ohne Zuhilfenahme einer Fördereinrichtung 220. Dies vereinfacht den Aufbau der Gasentfeuchtungsvorrichtung 10 und reduziert die Baukosten und den Wartungsaufwand.

Auch wenn die erste und zweite Fluidleitung 101, 102 des Wärmeübertragers 100 mit kreisförmigen (rohrförmigen) Querschnitten dargestellt sind, können diese beliebige Querschnitte aufweisen. So kann auch die zweite Fluidleitung 102 rechteckige Querschnitte aufweisen, die auf zwei Seiten eines ebenfalls rechteckigen Querschnitts der ersten Fluidleitung angeordnet sind. Mit anderen Worten bilden zwei (einzelne) zweite Fluidleitungen 102 mit der ersten Fluidleitung 101 eine Sandwich-Struktur.

Figur 10 zeigt schematisch ein Transportmittel mit einer Gasentfeuchtungsvorrichtung. Obwohl das Transportmittel als Flugzeug dargestellt ist, kann es sich auch um einen Satelliten oder ein anderes Personen- und/oder Frachttransportmittel, wie beispielsweise einen Bus, einen Zug, ein Flugzeug, ein Schiff, etc., handeln.

Die voranstehend erörterten Varianten, Ausgestaltungen und Ausführungsbeispiele dienen lediglich zur Beschreibung der beanspruchten Lehre, schränken diese jedoch nicht auf die Varianten, Ausgestaltungen und Ausführungsbeispiele ein.

## Patentansprüche

1. Gasentfeuchtungsvorrichtung (10), umfassend:
einen ersten Wärmeübertrager (100A), der eine erste Fluidleitung (101) und eine zweite Fluidleitung (102) umfasst, wobei die zweite Fluidleitung (102) die erste Fluidleitung (101) zumindest abschnittsweise umgibt; und
einen zweiten Wärmeübertrager (100B), der eine erste Fluidleitung (101) und eine zweite Fluidleitung (102) umfasst, wobei die zweite Fluidleitung (102) die erste Fluidleitung (101) zumindest abschnittsweise umgibt,
**dadurch gekennzeichnet, dass**
der erste Wärmeübertrager (100A) dazu eingerichtet ist, ein in der zweiten Fluidleitung (102) des ersten Wärmeübertragers (100A) befindliches, zu entfeuchtendes Fluid mit einem ersten Kühlmedium auf einer Außenseite der zweiten Fluidleitung (102) des ersten Wärmeübertragers (100A) thermisch zu koppeln, wobei der erste Wärmeübertrager (100A) mit Kühlrippen (103), die eine Oberfläche der Außenseite der zweiten Fluidleitung (102) vergrößern, ausgestattet ist,
der zweite Wärmeübertrager (100B) dazu eingerichtet ist, ein in der zweiten Fluidleitung (102) des zweiten Wärmeübertragers (100B) befindliches, zu entfeuchtendes Fluid mit einem zweiten Kühlmedium auf einer Außenseite der zweiten Fluidleitung (102) des zweiten Wärmeübertragers (100B) thermisch zu koppeln, wobei der zweite Wärmeübertrager (100B) mit Kühlrippen (103), die eine Oberfläche der Außenseite der zweiten Fluidleitung (102) vergrößern, ausgestattet ist, und
die Gasentfeuchtungsvorrichtung (10) ferner umfasst:
eine ein Fluid führende Leitung (205), wobei das Fluid eine höhere Temperatur als das erste und/oder zweite Kühlmedium aufweist,
ein Ventil (210), das zwei Positionen einnehmen kann, wobei in einer ersten der zwei Positionen das von der Leitung geführte Fluid in die erste Fluidleitung (101) des ersten Wärmeübertragers (100A) geleitet wird und in einer zweiten der zwei Positionen das Fluid in die erste Fluidleitung (101) des zweiten Wärmeübertragers (100B) geleitet wird; und
eine Steuerung (200), die dazu eingerichtet ist, das Ventil (210) wahlweise in die erste oder zweite Position zu stellen.

2. Gasentfeuchtungsvorrichtung (10) gemäß Anspruch 1, ferner umfassend:
mindestens eine Fördereinrichtung (220) für das erste und/oder zweite Kühlmedium,
wobei die Steuerung (200) ferner dazu eingerichtet ist, das erste Kühlmedium über die Außenseite der zweiten Fluidleitung (102) des ersten Wärmeübertragers (100A) zu fördern, wenn das Ventil (210) in die zweite Position gestellt ist, und das zweite Kühlmedium über die Außenseite der zweiten Fluidleitung (102) des zweiten Wärmeübertragers (100B) zu fördern, wenn das Ventil (210) in die erste Position gestellt ist.

3. Gasentfeuchtungsvorrichtung (10) gemäß Anspruch 1 oder 2, wobei ein Auslass (104) der ersten Fluidleitung (101) des ersten Wärmeübertragers (100A) mit einem Einlass (105) der zweiten Fluidleitung (102) des zweiten Wärmeübertragers (100B) fluidisch gekoppelt ist.

4. Gasentfeuchtungsvorrichtung (10) gemäß einem der Ansprüche 1 bis 3, wobei ein Auslass (104) der ersten Fluidleitung (101) des zweiten Wärmeübertragers (100B) mit einem Einlass (105) der zweiten Fluidleitung (102) des ersten Wärmeübertragers (100A) fluidisch gekoppelt ist.

5. Gasentfeuchtungsvorrichtung (10) gemäß Anspruch 1 oder 2, wobei ein Auslass (114) der ersten Fluidleitung (101) des ersten Wärmeübertragers (100A) mit einem Einlass (115) der zweiten Fluidleitung (102) des ersten Wärmeübertragers (100A) fluidisch gekoppelt ist.

6. Gasentfeuchtungsvorrichtung (10) gemäß Anspruch 5, wobei ein Ende der ersten Fluidleitung (101) des ersten Wärmeübertragers (100A), das den Auslass (114) der ersten Fluidleitung (101) des ersten Wärmeübertragers (100A) bildet, vollständig von der zweiten Fluidleitung (102) des ersten Wärmeübertragers (100A) umgeben ist und eine Strömungsrichtung eines durch die erste Fluidleitung (101) strömenden Fluids in einem von dem Einlass (115) der zweiten Fluidleitung (102) des ersten Wärmeübertragers (100A) gebildeten Bereich der zweiten Fluidleitung (102) des ersten Wärmeübertragers (100A) umgekehrt wird.

7. Gasentfeuchtungsvorrichtung (10) gemäß Anspruch 5 oder 6, wobei ein Auslass (116) der zweiten Fluidleitung (102) des ersten Wärmeübertragers (100A) mit einem Einlass (117) der ersten Fluidleitung (101) des zweiten Wärmeübertragers (100B) fluidisch gekoppelt ist.

8. Gasentfeuchtungsvorrichtung (10) gemäß Anspruch 1 oder 2, wobei ein Auslass (126) der zweiten Fluidleitung (102) des ersten Wärmeübertragers (100A) mit einem Einlass (115) der zweiten Fluidleitung (102) des zweiten Wärmeübertragers (100B) fluidisch gekoppelt ist.

9. Gasentfeuchtungsvorrichtung (10) gemäß Anspruch 8, wobei ein Einlass (124) der ersten Fluidleitung (101) des ersten Wärmeübertragers (100A) mit einem Auslass (114) der ersten Fluidleitung (102) des zweiten Wärmeübertragers (100B) fluidisch gekoppelt ist.

10. Gasentfeuchtungsvorrichtung (10) gemäß einem der Ansprüche 2 bis 9, ferner umfassend:
einen Kühlmediumkanal (310), in oder an dem die Fördereinrichtung (220) für das erste und/oder zweite Kühlmedium angeordnet ist,
wobei der erste Wärmeübertrager (100A) und/oder der zweite Wärmeübertrager (100B) in dem Kühlmediumkanal (310) angeordnet ist.

11. Gasentfeuchtungsvorrichtung (10) gemäß Anspruch 10, wobei der Kühlmediumkanal (310) zumindest in einem Abschnitt aus einem Außenzylinder (321) und einem in dem Außenzylinder (321) konzentrisch angeordneten Innenzylinder (322) besteht,
wobei der erste Wärmeübertrager (100A) spiralförmig geformt ist und/oder der zweite Wärmeübertrager (100B) spiralförmig geformt ist, und
wobei der erste Wärmeübertrager (100A) und/oder der zweite Wärmeübertrager (100B) in einem von dem Außenzylinder (321) und dem Innenzylinder (322) gebildeten Ringspalt angeordnet ist/sind.

12. Gasentfeuchtungsvorrichtung (10) gemäß Anspruch 11, wobei der Außenzylinder (321) und der Innenzylinder (322) jeweils an einer sich entsprechenden Stirnseite (323, 324) geschlossen ist und zumindest der Außenzylinder (321) an einer der Stirnseite (323, 324) gegenüberliegenden Seite geöffnet ist, und der von dem Außenzylinder (321) und dem Innenzylinder (322) gebildete Ringspalt eine Kühlmediumeintrittsöffnung (325) bildet.

13. Gasentfeuchtungsvorrichtung (10) gemäß einem der Ansprüche 1 bis 12, ferner umfassend:
mindestens einen ersten Sensor (230A), der in dem ersten Wärmeübertrager (100A) angeordnet ist, und/oder
mindestens einen zweiten Sensor (230B), der in dem zweiten Wärmeübertrager (100B) angeordnet ist,
wobei die Steuerung (200) ferner dazu eingerichtet ist, ein Signal des mindestens einen ersten Sensors (230A) und/oder des mindestens einen zweiten Sensors (230B) zu empfangen und zu ermitteln, ob die zweite Fluidleitung (102) des zugehörigen Wärmeübertragers (100) vereist ist.

14. Gasentfeuchtungsvorrichtung (10) gemäß einem der Ansprüche 1 bis 13, ferner umfassend:
mindestens einen Sammelbehälter (410) für entfeuchtetes Gas, der mit einem Auslass (106, 116, 136) der zweiten Fluidleitung (102) mindestens eines des ersten Wärmeübertragers (100A) und des zweiten Wärmeübertragers (100B) fluidisch gekoppelt ist; und/oder
mindestens einen Sammelbehälter (420) für Wasser, der mit einem Auslass (421, 422) für Wasser mindestens einer der ersten Fluidleitung (101) und zweiten Fluidleitung (102) mindestens eines des ersten Wärmeübertragers (100A) und des zweiten Wärmeübertragers (100B) fluidisch gekoppelt ist.

15. Transportmittel (11), das eine Gasentfeuchtungsvorrichtung (10) gemäß einem der Ansprüche 1 bis 14 umfasst.

## Claims

1. Gas dehumidification apparatus (10) comprising:
a first heat exchanger (100A), which comprises a first fluid line (101) and a second fluid line (102), wherein the second fluid line (102) at least sectionally surrounds the first fluid line (101); and
a second heat exchanger (100B), which comprises a first fluid line (101) and a second fluid line (102), wherein the second fluid line (102) at least sectionally surrounds the first fluid line (101),
**characterized in that**
the first heat exchanger (100A) is configured to thermally couple a fluid to be dehumidified that is situated in the second fluid line (102) of the first heat exchanger (100A) to a first cooling medium on an outer side of the second fluid line (102) of the first heat exchanger (100A), wherein the first heat exchanger (100A) is provided with cooling ribs (103) which enlarge a surface of the outer side of the second fluid line (102),
the second heat exchanger (100B) is configured to thermally couple a fluid to be dehumidified that is situated in the second fluid line (102) of the second heat exchanger (100B) to a second cooling medium on an outer side of the second fluid line (102) of the second heat exchanger (100B), wherein the second heat exchanger (100B) is provided with cooling ribs (103) which enlarge a surface of the outer side of the second fluid line (102), and
the gas dehumidification apparatus (10) furthermore comprises:
a line (205) which carries a fluid, wherein the fluid has a higher temperature than the first and/or second cooling medium,
a valve (210) which can assume two positions, wherein, in a first of the two positions, the fluid carried by the line is conducted into the first fluid line (101) of the first heat exchanger (100A) and, in a second of the two positions, the fluid is conducted into the first fluid line (101) of the second heat exchanger (100B); and
a controller (200) which is configured to selectively move the valve (210) into the first or second position.

2. Gas dehumidification apparatus (10) according to Claim 1, furthermore comprising:
at least one conveying device (220) for the first and/or the second cooling medium,
wherein the controller (200) is furthermore configured to convey the first cooling medium over the outer side of the second fluid line (102) of the first heat exchanger (100A) if the valve (210) has been moved into the second position, and to convey the second cooling medium over the outer side of the second fluid line (102) of the second heat exchanger (100B) if the valve (210) has been moved into the first position.

3. Gas dehumidification apparatus (10) according to Claim 1 or 2, wherein an outlet (104) of the first fluid line (101) of the first heat exchanger (100A) is coupled fluidically to an inlet (105) of the second fluid line (102) of the second heat exchanger (100B).

4. Gas dehumidification apparatus (10) according to one of Claims 1 to 3, wherein an outlet (104) of the first fluid line (101) of the second heat exchanger (100B) is coupled fluidically to an inlet (105) of the second fluid line (102) of the first heat exchanger (100A).

5. Gas dehumidification apparatus (10) according to Claim 1 or 2, wherein an outlet (114) of the first fluid line (101) of the first heat exchanger (100A) is coupled fluidically to an inlet (115) of the second fluid line (102) of the first heat exchanger (100A).

6. Gas dehumidification apparatus (10) according to Claim 5, wherein an end of the first fluid line (101) of the first heat exchanger (100A) that forms the outlet (114) of the first fluid line (101) of the first heat exchanger (100A) is surrounded completely by the second fluid line (102) of the first heat exchanger (100A), and a flow direction of a fluid flowing through the first fluid line (101) is reversed in a region of the second fluid line (102) of the first heat exchanger (100A) that is formed by the inlet (115) of the second fluid line (102) of the first heat exchanger (100A).

7. Gas dehumidification apparatus (10) according to Claim 5 or 6, wherein an outlet (116) of the second fluid line (102) of the first heat exchanger (100A) is coupled fluidically to an inlet (117) of the first fluid line (101) of the second heat exchanger (100B).

8. Gas dehumidification apparatus (10) according to Claim 1 or 2, wherein an outlet (126) of the second fluid line (102) of the first heat exchanger (100A) is coupled fluidically to an inlet (115) of the second fluid line (102) of the second heat exchanger (100B).

9. Gas dehumidification apparatus (10) according to Claim 8, wherein an inlet (124) of the first fluid line (101) of the first heat exchanger (100A) is coupled fluidically to an outlet (114) of the first fluid line (102) of the second heat exchanger (100B).

10. Gas dehumidification apparatus (10) according to one of Claims 2 to 9, furthermore comprising:
a cooling-medium channel (310), in or on which the conveying device (220) for the first and/or second cooling medium is arranged,
wherein the first heat exchanger (100A) and/or the second heat exchanger (100B) are/is arranged in the cooling-medium channel (310).

11. Gas dehumidification apparatus (10) according to Claim 10, wherein the cooling-medium channel (310) consists, at least in one portion, of an outer cylinder (321) and an inner cylinder (322) which is arranged concentrically in the outer cylinder (321),
wherein the first heat exchanger (100A) is of spiral-shaped form and/or the second heat exchanger (100B) is of spiral-shaped form, and
wherein the first heat exchanger (100A) and/or the second heat exchanger (100B) are/is arranged in an annular gap formed by the outer cylinder (321) and the inner cylinder (322).

12. Gas dehumidification apparatus (10) according to Claim 11, wherein the outer cylinder (321) and the inner cylinder (322) are each closed at a corresponding face side (323, 324), and at least the outer cylinder (321) is open at a side which is opposite the face side (323, 324), and the annular gap formed by the outer cylinder (321) and the inner cylinder (322) forms a cooling-medium entry opening (325).

13. Gas dehumidification apparatus (10) according to one of Claims 1 to 12, furthermore comprising:
at least one first sensor (230A), which is arranged in the first heat exchanger (100A), and/or
at least one second sensor (230B), which is arranged in the second heat exchanger (100B),
wherein the controller (200) is furthermore configured to receive a signal of the at least one first sensor (230A) and/or of the at least one second sensor (230B) and to ascertain whether the second fluid line (102) of the associated heat exchanger (100) is iced up.

14. Gas dehumidification apparatus (10) according to one of Claims 1 to 13, furthermore comprising:
at least one collecting container (410) for dehumidified gas, which is coupled fluidically to an outlet (106, 116, 136) of the second fluid line (102) of at least one of the first heat exchanger (100A) and second heat exchanger (100B); and/or
at least one collecting container (420) for water, which is coupled fluidically to an outlet (421, 422) for water of at least one of the first fluid line (101) and second fluid line (102) of at least one of the first heat exchanger (100A) and second heat exchanger (100B).

15. Transport means (11) comprising a gas dehumidification apparatus (10) according to one of Claims 1 to 14.

## Revendications

1. Dispositif de déshumidification de gaz (10), comportant:
un premier échangeur de chaleur (100A) qui comporte une première conduite de fluide (101) et une deuxième conduite de fluide (102), la deuxième conduite de fluide (102) entourant la première conduite de fluide (101) au moins dans certaines parties; et
un deuxième échangeur de chaleur (100B) qui comporte une première conduite de fluide (101) et une deuxième conduite de fluide (102), la deuxième conduite de fluide (102) entourant la première conduite de fluide (101) au moins dans certaines parties,
**caractérisé en ce que**
le premier échangeur de chaleur (100A) est conçu pour coupler thermiquement un fluide à déshumidifier se trouvant dans la deuxième conduite de fluide (102) du premier échangeur de chaleur (100A) à un premier réfrigérant sur un côté extérieur de la deuxième conduite de fluide (102) du premier échangeur de chaleur (100A), le premier échangeur de chaleur (100A) étant doté d'ailettes de refroidissement (103) qui augmentent une surface du côté extérieur de la deuxième conduite de fluide (102),
le deuxième échangeur de chaleur (100B) est conçu pour coupler thermiquement un fluide à déshumidifier se trouvant dans la deuxième conduite de fluide (102) du deuxième échangeur de chaleur (100B) à un deuxième réfrigérant sur un côté extérieur de la deuxième conduite de fluide (102) du deuxième échangeur de chaleur (100B), le deuxième échangeur de chaleur (100B) étant doté d'ailettes de refroidissement (103) qui augmentent une surface du côté extérieur de la deuxième conduite de fluide (102), et
le dispositif de déshumidification de gaz (10) comportant en outre:
une conduite (205) acheminant un fluide, le fluide présentant une température plus élevée que le premier et/ou le deuxième réfrigérant,
une soupape (210) qui peut adopter deux positions, le fluide acheminé par la conduite étant guidé dans la première conduite de fluide (101) du premier échangeur de chaleur (100A) dans une première des deux positions et le fluide étant guidé dans la première conduite de fluide (101) du deuxième échangeur de chaleur (100B) dans une deuxième des deux positions; et
une commande (200) qui est conçue pour placer la soupape (210) sélectivement dans la première ou la deuxième position.

2. Dispositif de déshumidification de gaz (10) selon la revendication 1, comportant en outre:
au moins un dispositif de refoulement (220) pour le premier et/ou le deuxième réfrigérant,
la commande (200) étant en outre conçue pour refouler le premier réfrigérant sur le côté extérieur de la deuxième conduite de fluide (102) du premier échangeur de chaleur (100A) lorsque la soupape (210) est placée dans la deuxième position, et pour refouler le deuxième réfrigérant sur le côté extérieur de la deuxième conduite de fluide (102) du deuxième échangeur de chaleur (100B) lorsque la soupape (210) est placée dans la première position.

3. Dispositif de déshumidification de gaz (10) selon la revendication 1 ou 2, une sortie (104) de la première conduite de fluide (101) du premier échangeur de chaleur (100A) étant couplée fluidiquement à une entrée (105) de la deuxième conduite de fluide (102) du deuxième échangeur de chaleur (100B).

4. Dispositif de déshumidification de gaz (10) selon l'une des revendications 1 à 3, une sortie (104) de la première conduite de fluide (101) du deuxième échangeur de chaleur (100B) étant couplée fluidiquement à une entrée (105) de la deuxième conduite de fluide (102) du premier échangeur de chaleur (100A).

5. Dispositif de déshumidification de gaz (10) selon la revendication 1 ou 2, une sortie (114) de la première conduite de fluide (101) du premier échangeur de chaleur (100A) étant couplée fluidiquement à une entrée (115) de la deuxième conduite de fluide (102) du premier échangeur de chaleur (100A).

6. Dispositif de déshumidification de gaz (10) selon la revendication 5, une extrémité de la première conduite de fluide (101) du premier échangeur de chaleur (100A), laquelle extrémité forme la sortie (114) de la première conduite de fluide (101) du premier échangeur de chaleur (100A), étant entourée complètement par la deuxième conduite de fluide (102) du premier échangeur de chaleur (100A) et un sens d'écoulement d'un fluide s'écoulant à travers la première conduite de fluide (101) étant inversé dans une région de la deuxième conduite de fluide (102) du premier échangeur de chaleur (100A), laquelle région est formée par l'entrée (115) de la deuxième conduite de fluide (102) du premier échangeur de chaleur (100A).

7. Dispositif de déshumidification de gaz (10) selon la revendication 5 ou 6, une sortie (116) de la deuxième conduite de fluide (102) du premier échangeur de chaleur (100A) étant couplée fluidiquement à une entrée (117) de la première conduite de fluide (101) du deuxième échangeur de chaleur (100B).

8. Dispositif de déshumidification de gaz (10) selon la revendication 1 ou 2, une sortie (126) de la deuxième conduite de fluide (102) du premier échangeur de chaleur (100A) étant couplée fluidiquement à une entrée (115) de la deuxième conduite de fluide (102) du deuxième échangeur de chaleur (100B).

9. Dispositif de déshumidification de gaz (10) selon la revendication 8, une entrée (124) de la première conduite de fluide (101) du premier échangeur de chaleur (100A) étant couplée fluidiquement à une sortie (114) de la première conduite de fluide (102) du deuxième échangeur de chaleur (100B).

10. Dispositif de déshumidification de gaz (10) selon l'une des revendications 2 à 9, comportant en outre:
un canal de réfrigérant (310), dans ou sur lequel le dispositif de refoulement (220) pour le premier et/ou le deuxième réfrigérant est disposé,
le premier échangeur de chaleur (100A) et/ou le deuxième échangeur de chaleur (100B) étant disposé(s) dans le canal de réfrigérant (310).

11. Dispositif de déshumidification de gaz (10) selon la revendication 10, le canal de réfrigérant (310) consistant, au moins dans une partie, en un cylindre extérieur (321) et un cylindre intérieur (322) disposé concentriquement dans le cylindre extérieur (321),
le premier échangeur de chaleur (100A) étant formé de manière hélicoïdale et/ou le deuxième échangeur de chaleur (100B) étant formé de manière hélicoïdale, et
le premier échangeur de chaleur (100A) et/ou le deuxième échangeur de chaleur (100B) étant disposé(s) dans un interstice annulaire formé par le cylindre extérieur (321) et le cylindre intérieur (322).

12. Dispositif de déshumidification de gaz (10) selon la revendication 11, le cylindre extérieur (321) et le cylindre intérieur (322) étant fermés respectivement au niveau d'un côté frontal (323, 324) correspondant et au moins le cylindre extérieur (321) étant ouvert au niveau d'un côté opposé au côté frontal (323, 324), et l'interstice annulaire formé par le cylindre extérieur (321) et le cylindre intérieur (322) formant une ouverture d'entrée de réfrigérant (325).

13. Dispositif de déshumidification de gaz (10) selon l'une des revendications 1 à 12, comportant en outre:
au moins un premier capteur (230A) qui est disposé dans le premier échangeur de chaleur (100A), et/ou
au moins un deuxième capteur (230B) qui est disposé dans le deuxième échangeur de chaleur (100B),
la commande (200) étant en outre conçue pour recevoir un signal de l'au moins un premier capteur (230A) et/ou de l'au moins un deuxième capteur (230B) et pour déterminer si la deuxième conduite de fluide (102) de l'échangeur de chaleur (100) associé est givrée.

14. Dispositif de déshumidification de gaz (10) selon l'une des revendications 1 à 13, comportant en outre:
au moins un récipient de collecte (410) pour du gaz déshumidifié, lequel récipient est couplé fluidiquement à une sortie (106, 116, 136) de la deuxième conduite de fluide (102) d'au moins un parmi le premier échangeur de chaleur (100A) et le deuxième échangeur de chaleur (100B); et/ou
au moins un récipient de collecte (420) pour de l'eau, lequel récipient est couplé fluidiquement à une sortie (421, 422) pour de l'eau d'au moins une parmi la première conduite de fluide (101) et la deuxième conduite de fluide (102) d'au moins un parmi le premier échangeur de chaleur (100A) et le deuxième échangeur de chaleur (100B).

15. Moyen de transport (11), qui comporte un dispositif de déshumidification de gaz (10) selon l'une des revendications 1 à 14.
